# EUROPEAN PATENT APPLICATION

(11) **EP 2 355 114 A2**
(43) Date of publication of application: **10.08.2011**
(21) Application number: 11000359.7
(22) Date of filing: 18.01.2011
(51) Int. Cl.: H01F 6/04, F25B 9/00

(54) **Helium filling methods**

(30) Priority: 27.01.2010 US 298687 P; 02.03.2010 US 715495
(71) Applicant: Linde AG, 80331 München (DE)
(72) Inventor: Bohn, Matthias, 15370 Petershagen (DE); Lose, Niels, 82319 Starnberg (DE); Baciu, Dan, 85649 Brunnthal (DE)
(74) Representative: Zahn, Christoph

(57) **Abstract**

Methods for filling magnets, cooling magnets and energizing magnets are disclosed. The methods are performed at a helium transfill facility, and helium is employed in filling the magnet, cooling the magnet to appropriate temperatures and energizing the magnet such that it can be employed in operations where superconductive magnets are required.

## Description

### CROSS REFERENCE TO RELATED APPLICATIONS

The present application claims priority from US Provisional Patent Application 61/298,687 filed January 27, 2010.

### BACKGROUND OF THE INVENTION

The invention provides for methods for integrating a helium cool down process and subsequent magnet energization process for superconducting magnets with a helium recovery process at a helium transfill facility. More particularly, the invention provides for using cryogenic helium gas to cool down the superconducting coils of the magnet, the subsequent filling of the magnet helium cryostat (reservoir) with liquid helium, the recovery of the associated helium gas from these activities, recovery of helium during normal boil off while the magnet is ramping and the recovery of the helium gas released as a result of a quench that may occur during the energizing (ramping) of the magnet.

Magnetic resonance imaging (MRI) and nuclear magnetic resonance (NMR) systems employing superconductive or other types of magnets are employed in fields such as medical diagnostics. The superconductive magnets comprise a coil assembly having a main coil which is at least partially immersed in liquid helium contained in a helium reservoir. The reservoir is typically surrounded by dual thermal shields which in turn are surrounded by a vacuum enclosure. Nb-Ti superconductive coils typically operate at a temperature of approximately 4 Kelvin, and Nb-Sn superconductive coils typically operate at a temperature of approximately 10 Kelvin. When the coil assembly is cooled to such a temperature it becomes superconductive and the magnet field strength is maintained without significant further energy input. A necessity for the operation of a superconducting magnet is the presence of a coolant. This coolant is typically liquid helium which can achieve the low temperatures necessary to allow the material of the magnet coil to reach a superconductive state. This need for low temperatures necessitates that the reservoir in the magnet must be filled with a sufficient amount of liquid helium at a cold enough temperature to allow the magnet coils to become superconducting.

Typically the cooling and subsequent filling of the magnet assembly with helium is first done at the magnet manufacturing facility and then sometimes repeated at the customer site, for example at a medical diagnostics facility. Helium will warm in the process of providing cooling to a material and some helium will enter the gaseous phase. Consequently, the magnets need to be refilled with helium regularly during the initial cooling operation and periodically during the ongoing operation. The filling or refilling operation must be carefully performed as contact with the helium is dangerous and improper handling of helium can be wasteful. The magnet must be filled with liquid helium before the superconducting coils can be energized.

These filling and refilling operations have their drawbacks as the helium must be transported to the manufacturing or customer site, adding to the cost of the operation when filling the space around the superconducting coils. In addition loses of helium due to volatilization are a factor to consider in transporting helium extended distances. Additionally, specially designed equipment may need to be fabricated and installed at a consuming location to provide the necessary helium transportation, filling and refilling. Often times in order to reduce helium costs liquid nitrogen is used as the initial coolant down to approximately 80K. This nitrogen must then be removed from the cryostat to prevent freezing when liquid helium is introduced.

The invention seeks to overcome these difficulties by providing cryogenic helium gas cooling, liquid helium fill and helium gas recovery systems at existing helium transfill facilities. Reduced capital costs, greatly enhanced helium recovery and elimination of nitrogen as a coolant are benefits realized by the invention.

Helium vented from the MRI units during cool-down and testing can be recovered rather than simply lost. Special filling equipment, once fabricated, has sustained usage at the transfill facility. The invention further provides for the use of an onsite helium ISO container as a source of cryogenic helium gas for use in cooling down the superconductive coils of a magnet from ambient temperatures.

### SUMMARY OF THE INVENTION

The invention provides for a method for cooling the superconducting coils of a magnet with cryogenic helium gas at a helium transfill facility comprising directing cryogenic gaseous helium from an ISO (International Organization for Standardization) container to the magnet and flowing it through the cryostat of the unit. Once the helium gas has provided cooling to the cryostat (reservoir) and coils of the magnet, the helium is recovered for reprocessing.

The temperature of the gaseous helium is 4-80 K. The helium is fed from the onsite helium ISO container until the temperature of the magnet is stable. Alternatively the magnet is filled from said onsite helium ISO container until the cryostat is filled to its designated design maximum. The cryogenic helium gas may also be recovered from the magnet.

The invention also provides for a method of recovery of the vaporized helium product that results from the filling process back to the helium transfill facility during the filling of a magnet with liquid helium.

The recovered helium is gaseous helium which has been vaporized from the liquid helium used to fill the magnet. The vaporized helium is first recovered into a gas recovery bag which is in fluid communication with a helium gas collection system. The vaporized helium is compressed and fed to a helium recovery system which may contain helium gas purification and/or helium liquefaction. The purified and recovered liquefied helium may be fed to storage or used to cool down the superconductive coils of a magnet.

The invention further provides for a method for recovering vaporized helium from a magnet that is undergoing energizing at a helium transfill facility.

The invention further provides for a method of recovery at a helium transfill facility of gaseous helium released during the energizing (ramping) process undertaken for a magnet and any resultant quenches that may occur from this process.

The liquid helium in the magnet assembly vaporizes as a result of a process selected from the group consisting of superconducting coils producing heat into liquid helium and dissipation of energy from superconducting coils into liquid helium.

The recovered helium gas is treated per the processes described above and stored or recycled for use accordingly.

The magnet that is cooled, filled with the liquid helium and energized may be later used in equipment, such as an MRI or NMR, where a superconducting magnet is employed.

### BRIEF DESCRIPTION OF THE DRAWINGS

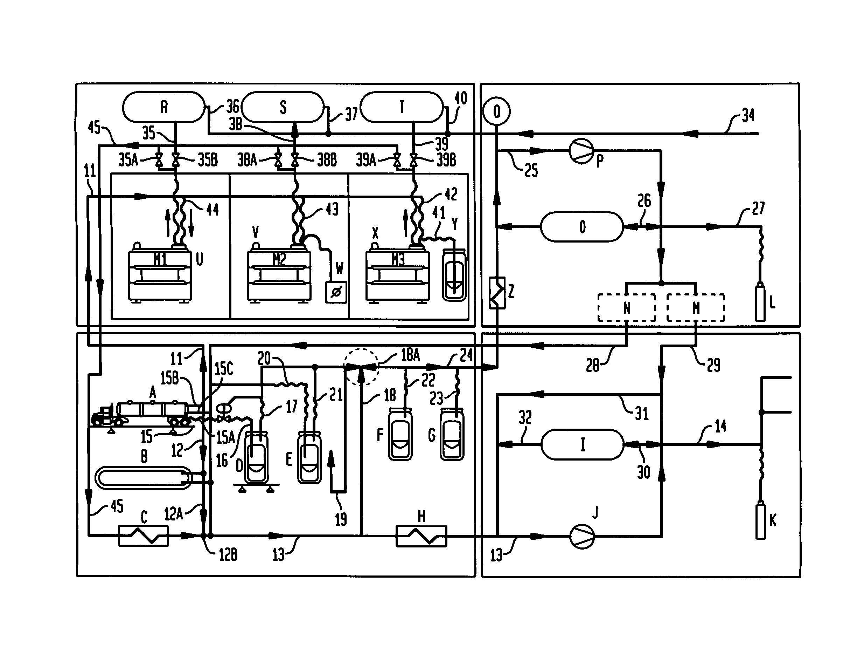

The figure is a schematic of a helium filling operation taking place at a helium transfill facility and its integration with magnet cool down.

### DETAILED DESCRIPTION OF THE INVENTION

The invention is a method for integrating the cooling, filling and energization of a magnet with helium with a helium transfill facility.

The figure describes a helium transfill facility 10 where the helium transfill is integrated with the filling and cooling down of magnets with helium. The liquid helium arrives at the helium transfill in a mobile ISO supply container A, typically having a nominal capacity of 36.00 liters or smaller. In order to reduce the pressure of the liquid helium supply container A to a pressure which allows for optimal liquid withdrawal, gaseous helium is withdrawn through the gaseous helium outlet valve of the liquid helium supply container A. Lines 11 and 12 exit the ISO supply container A as does line 15.

The cold gaseous helium may be fed through line 13 to an off-gas pre-heater H to a pure gaseous helium pressure buffer I and a pure helium compressor J which supplies compressed pure helium gas to the pure helium gas filling area K where pure helium is filled into cylinders and/or multi cylinder packs (MCP) and/or tube trailers. The pure helium gas leaving compressor J travels through line 14 to the cylinder filling station K or to trailers or bundles not shown. Alternatively, the cold helium gas is directed from the liquid helium supply container A to the superconductive magnet cooling area U through line 11 and used to pre-cool the magnet M1 from ambient temperature to a low temperature, which is defined by the manufacturer of the magnet.

When an optimal pressure, typically less than 5 psi(g), has been reached in the supply container A, liquid helium may be decanted into a permanent installed storage vessel B through line 12. Alternatively, the liquid helium is fed from the supply container A to the magnet booths containing superconductive magnet cooling area U were it is used for final cool down of the magnet and/or filling the magnet M3 and/or re-filling the magnet M2 after is has been energized and tested.

The operations conducted in the work areas labeled U, V and X and concerning magnets M1, M2 and M3 may all be conducted in one and the same work area.

The final cool down, filling and re-filling operations, as described above for the magnets, may also be carried out through the use of liquid helium supplied by dewars and filled in the dewar filling station(s) D and E. Dewar filling station D receives helium through line 15 and valve 15A and line 16 and releases the helium through line 17 where it may be directed through a three way valve 18A to line 18 and into line 13 or continue through to line 24 where lines 22 and 23 respectively feed dewar storage containers F and G. Dewar filling station E receives helium through line 13 and line 20 and dispenses the helium through line 21 where it will join with line 24 through the three way valve 18A or pass through line 18 into line 13 to be directed ultimately to cylinder filling station K. The helium from dewar filling station E may also be directed through line 21 and line 24 where it can enter the dewar storage containers F and G through lines 22 and 23 respectively.

The cold boil off gaseous helium from the dewar filling station(s) D and E may be directed to the superconductive magnet cooling area U and used for pre-cool of the magnet M1 from the ambient temperature to a low temperature (typically less than 80K) defined by the manufacturer of the magnet. The helium is fed through line 24 and off-gas heater Z to join line 34 of recovered helium. Alternatively, the cold boil off gaseous helium from the dewar filling stations D and E is fed line 24 through an impure off-gas pre-heater Z to the boil-off recovery bag(s) Q and then to the impure helium compressor P through line 25 which is provided with an impure gaseous helium pressure buffer O from line 26.

The recovered impure helium may be fed from the impure helium compressor P and the gaseous helium pressure buffer O to the impure cylinder filling station L for the filling of cylinders and/or MCPs and/or tube trailers (not shown) with impure "balloon grade" gaseous helium. Alternatively, the recovered impure helium may be purified by a helium purifier M and the purified helium may be fed to the pure gaseous helium pressure buffer I through lines 29 and 30. The helium from the pressure buffer I may be fed through line 32 and line 13 to the compressor J for feeding through to line 14 and to the cylinder filling station K. Alternatively, the recovered impure helium may be fed through a helium liquefier N through line 28 and line 20 and the liquefied helium may be reused for dewar filling D and E and/or for filling and re-filling of superconductive magnets M2 and M3 through line 28 to line 15C and through line 11 to the magnet booths V and X.

During pre-cool of magnet booth U and magnet M1, cool down and re-fill of the superconductive magnets M3 in magnet booth X, and the energizing and testing in magnet booth V of magnet M2, the cold outlet gas from the superconductive magnets may be directed to the quench gas recovery gas bags R, S and T through lines 35, 38 and 39 respectively, or directly to the impure gas bag Q through line 36. From this point in the process the gas in the impure gas bag Q is recovered as described above.

Alternatively, this cold outlet gas from the superconductive magnets may be fed through the pure cooling gas pre-heater C from line 45 by being directed through valves 35A, 38A and 39A from superconductive magnets M1, M2 and M3 respectively and through valve 12B to line 13 and recovered by feeding through off-gas pre-heater H through line 13 to a pure helium compressor J and through line 30 to a pure gaseous helium pressure buffer 1.

The cold helium gas stream is directed to the magnet booths U, V and X through line 11 from the ISO container supply A. Magnet M1 in magnet booth U is fed the cold helium gas through line 33 and the cold helium is recovered through valve 35B and line 35 through to quench gas recovery bag R. Some of the helium can be diverted through valve 35A to line 45 where it will pass through cooling gas pre-heater C and valve 12B to line 13 and off gas pre-heater H and through compressor J to line 14 where it can be recaptured in the cylinder filling station K.

Line 11 will also feed helium to magnet M2 in magnet booth V through line 11 and line 43. M2 can be energized by the use of a magnet testing unit W, and tested with this helium. Line 38 through valve 38B directs the recovered helium to the quench gas recovery bag S. As in the recovery of helium from magnet booth U, some helium is directed through valve 38A to line 45 where the recovered helium can be fed through to the cylinder filling station K.

The helium from line 11 can also be directed through line 42 to magnet booth X and magnet M3 which is being filled with helium. Alternatively magnet M3 if filled from a liquid helium dewar Y through line 41. Helium may also leave through line 39 and valve 39B to quench gas recovery bag T. Helium may also be directed through line 45 from valve 39A in the same fashion as magnet booths U and V so that recovered helium can be directed back to cylinder filling station K.

When energizing and testing the magnets in booth V, quenches, very rapid liquid helium boil off from the magnets, may occur. This quench gas or part thereof may be recovered by the use of one or more of the quench gas recovery bags, R, S and T. This recovered quench gas can be processed for additional uses as described above with reference to the helium gas recovered from quench gas recovery bags, R, S and T.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit and scope of the present invention.

## Claims

1. A method for providing cooling to superconducting coils of a magnet with cryogenic helium gas at a helium transfill facility comprising feeding cryogenic gaseous helium from an onsite helium container to said magnet and flowing said gaseous helium through a cryostat of said magnet.

2. The method as claimed in claim 1 wherein said container is an ISO container.

3. The method as claimed in claim 1 or 2 wherein the temperature of said gaseous helium is less than 80 K.

4. The method as claimed in any one of claims 1 to 3 wherein said helium is fed from said onsite helium container until said magnet temperature is stable.

5. The method as claimed in any one of claims 1 to 4 wherein said magnet filled with liquid helium is used in a device selected from the group consisting of magnetic resonance imaging and nuclear magnetic resonance.

6. The method as claimed in any one of claims 1 to 5 further comprising filling said magnet from said onsite helium container until said cryostat is filled to its designated design maximum.

7. The method as claimed in any one of claims 1 to 6 further comprising recovering said cryogenic helium gas from said magnet.

8. A method for recovering vaporized helium from filling a magnet with liquid helium at a helium transfill facility.

9. The method as claimed in claim 8 wherein said recovered helium is gaseous helium.

10. The method as claimed in claim 8 or 9 wherein said vaporized helium is first recovered into a quench gas recovery bag.

11. The method as claimed in claim 10 wherein said quench gas recovery bag is in fluid communication with a helium gas collection system, which is preferably a helium gas bag.

12. The method as claimed in any one of claims 8 to 11 wherein said vaporized helium is compressed and fed to a helium purifier.

13. The method as claimed in any one of claims 8 to 12 wherein said purified and compressed helium is fed to a helium liquefier.

14. The method as claimed in claim 13 wherein liquefied helium is withdrawn from said liquefier and fed to storage and preferably used to cool down superconductive coils of a magnet.

15. The method as claimed in any one of claims 8 to 14 further comprising recovering vaporized helium from said magnet while it is undergoing energizing at said helium transfill facility wherein said vaporized helium is preferably released during quenching of said magnet.
